# EUROPEAN PATENT APPLICATION

(11) **EP 4 851 334 A1**
(43) Date of publication of application: **09.12.2026**
(21) Application number: 25181537.9
(22) Date of filing: 08.06.2025
(51) Int. Cl.: C25B 1/04, C25B 11/043, H01M 4/90

(54) **MODIFIED CARBON NITRIDE MATERIALS AS HIGH PERFORMANCE ELECTROCATALYSTS**

(71) Applicant: Max-Planck-Gesellschaft zur Förderung der Wissenschaften e.V., 80539 München (DE)
(72) Inventor: Antonietti, Markus, 14558 Bergholz-Rehbrücke (DE); Eid, Kamel, 44621 Belbis (EG)
(74) Representative: Deblon, Jörg-Stephan

(57) **Abstract**

The present invention relates to modified carbon nitride materials obtainable by electrochemical reduction in a liquid protic medium at a negative bias potential for a defined period of time and the respective process for their manufacture. In a further aspect the invention comprises electrode materials, electrolytic cells and electrolyzers comprising such modified carbon nitride materials as well as their use in electrocatalytic applications.

The inventive modified carbon nitride materials exhibit properties such as low overpotential, high turnover frequency, insensitivity to changing current and current densities, high stability and durability which are comparable or even better than those of platinum group metals or alloys which are currently the gold standard in particular in electrolytic hydrogen evolution reactions.

## Description

### Field of the Invention

The present invention relates to modified carbon nitride materials obtainable by electrochemical reduction in a liquid protic medium at a negative bias potential for a defined period of time and the respective process for their manufacture. In a further aspect the invention comprises electrode materials, electrolytic cells and electrolyzers comprising such modified carbon nitride materials as well as their use in electrocatalytic applications.

The inventive modified carbon nitride materials exhibit properties such as low overpotential, high turnover frequency, insensitivity to changing current and current densities, high stability and durability which are comparable or even better than those of platinum group metals or alloys which are currently the gold standard in particular in electrolytic hydrogen evolution reactions.

### Background

Hydrogen is regarded as a next-generation fuel for the future green economy. While nowadays industry mainly relies on production of so-called "grey hydrogen" obtained from methane by steam reforming or similar fossil fuel based processes, the most promising and sustainable solution is the production of hydrogen via water splitting and by employing electricity originated from renewable energy sources. However, the water splitting process requires efficient electrocatalysts capable of working at low overpotentials and high current densities without significant losses or degradation over time in order to ensure energy efficiency and thus commercial viability.

To date, the most active and widespread catalysts in the sector are based on platinum metals or their alloys deposited on mesoporous carbon (e.g. Pt/C). Although these catalysts show a high activity in hydrogen evolution reactions (HER) they are expensive and rare and tend to degrade quickly in particular when exposed to alternating current densities.

Therefore, in recent years the exploration of alternatives to Platinum-group metals became a most urgent und critical need in order to reestablish a global energy system on new systems for low-cost hydrogen evolution reactions (HER).

As an outcome, various Platinum metal free catalysts including those based on more common transition metals compounds such as carbides, phosphides, chalgonides and carbon-based materials were developed (see [1] to [5]).

However, all of such materials are still far from be applied in a practical application due to low stability and performance.

In another more promising approach porous graphitic carbon nitride (hereinafter also abbreviated as g-C₃N₄) nanostructures gained significant attention as new alternatives since they exhibit appealing electronic band structure, outstanding physicochemical durability, high surface area, possibility to craft channels and pores as well as fast electron and ion transport and are easily synthesized from earth abundant educts (see [6] to [8]).

When doped with metal nanoparticles and single-metal atoms first data indicate their general suitability for HER. However, their overall current density (≤100 mA/cm²), overpotential, even if down to 71 mV and stability are still inferior to the gold standard of noble metals (see [9] to [11].

As a consequence there was still a need for electrocatalysts offering performance parameters in HER which are closer to Platinum metals and their replacement materials disclosed in the state of the art and a facile process for their preparation starting from readily available materials.

### Summary of the Invention

According to one aspect of the invention, there is now provided a modified carbon nitride material obtainable by exposing a carbon nitride material in a liquid protic medium to a negative bias potential for a period of time sufficient to decrease the initial overpotential η₁₀ compared to the Nernst potential by at least 10 %, preferably at least 50 %, more preferably at least 80 % and even more preferably at least 90 %, whereby the overpotential η₁₀ is determined or normalized against Reversible Hydrogen Electrode (RHE) in 0.5 molar aqueous sulfuric acid at 20 °C by linear sweep voltammetry (LSV) with a scan rate of 2 mV*s⁻¹ for the hydrogen evolution reaction (HER).

In an alternative embodiment the period of time of exposure time is sufficient to decrease the initial overpotential η₁₀ by at least 100 mV, preferably 200 mV, more preferably 300 mV, whereby the overpotential η₁₀ is determined or normalized against Reversible Hydrogen Electrode (RHE) in 0.5 molar aqueous sulfuric acid at 20 °C by linear sweep voltammetry (LSV) with a scan rate of 2 mV*s⁻¹ for the hydrogen evolution reaction (HER).

In yet an alternative embodiment the exposure is effected for a period of time sufficient to increase the current density at a voltage corresponding to the initial overpotential from 10 mA*cm⁻² to at least 50 mA*cm⁻², more preferably to at least 200 mA*cm⁻² and even more preferably 500 mA*cm⁻² and yet even more preferably at least 1,000 mA*cm⁻².

Typically an exposure time of at least 1 minute, preferably at least 5 minutes is sufficient to achieve the minimum improvements and values as defined hereinabove.

In further aspects the invention comprises electrode materials, catalyst-coated membranes (CCMs), membrane-electrode-assemblies, electrolytic cells, fuel cells and electrolyzers comprising such modified carbon nitride materials.

In yet another aspect the invention relates to electrochemical methods and processes applying the inventive modified carbon nitride materials, electrode materials, catalyst-coated membranes (CCMs), membrane-electrode-assemblies, electrolytic cells, fuel cells and electrolyzers.

### Brief description of the drawings

Figures 1a, 1f and 1k show the formation of MnCo/g-C₃N₄ (Figure 1a), MnCu/g-C₃N₄ (Figure 1f), and MnFe/g- C₃N₄ (Figure 1k) in form of ultra-long fiber like structures.
Figures 1b, 1g and 1l show TEM images MnCo/g-C₃N₄ (Fig. 1b), MnCu/g-C₃N₄ (Fig. 1g) and MnFe/g-C₃N₄ (Fig. 1l) having a rougher surface, multiple twists, surface steps, and a high hierarchical porosity.
Figures 1c, 1h and 1m show HRTEM images of MnCo/g-C₃N₄ (Figure 1c), MnCu/g-C₃N₄ (Figure 1h) and MnFe/g-C₃N₄ (Figure 1m) the respective insets selected area electron diffraction (SAED) images.
Figures 1d, 1i and 1n display HAADF-STEM images showing structural details of MnCo/g-C₃N₄ (Figure 1d), MnCu/g-C₃N₄ (Figure 1i), and MnFe/g-C₃N₄ (Figure 1n).
Figures 1e, 1j and 1o show the elemental mapping of MnCo/g-C₃N₄ (Fig. 1e), MnCu/g-C₃N₄ (Figure 1j), and MnFe/g-C₃N₄ (Figure 1o).
Figures 2a and 2b show TEM images of metal-free g-C₃N₄ melamine (Figure 2a) and Mn/g-C₃N₄ (Figure 2b).
Figure 3 displays the XRD diffraction peaks at a 2 θ angle of compounds of examples 1 to 5.
Figure 4 displays the FTIR spectra and characteristic absorption bands of the carbon nitride materials employed.
Figures 5a and 5b show the core-level of valence states and surface composition of MnM/g-C₃N₄ as determined by XPS analysis.
Figures 6a and 6b for MnCo/g-C₃N₄, Figures 7a and 7b for MnCu/g-C₃N₄ and Figures 8a and 8b for MnFe/g-C₃N₄) display the N₂-ads/des isotherms measured for the aformentioned materials.
Figure 9a for MnCo/g-C₃N₄, Figure 9b for MnCu/g-C₃N₄, Figure 9c for MnFe/g-C₃N₄ and Figure 9d for Pt/C show the cyclic voltammograms measured for the aforementioned materials.
Figures 10a to 10e display the cyclic voltammograms measured at different scan rates to determine the electrochemical active surface areas (ECSAs) of the materials prepared according to examples 1 to 5.
Figures 11a to 11e display the results of Linear Sweep Voltammetry (LSV) showing the decrease in overpotential upon exposure to negative bias potential for MnCo/g-C₃N₄ (Figure 11a), MnCu/g-C₃N₄ (Figure 11b), MnFe/g-C₃N₄ (Figure 11c), each after 0, 12 and 24 hours of exposure, all compounds being prepared according to examples 1 to 5 and Pt/C for comparison before i.e. after 0 hours (Figure 11d) and after (Figure 11e) exposure to a negative bias potential.
Figures 12 a and 12b show the Tafel plots and slopes for the inventive materials according to examples 1 to 5 and Pt/C for comparison before exposure to a negative bias potential (Figure 12a) and thereafter (Figure 12b).
Figures 13a and 13b show the EIS Nyquist Plots for the inventive materials according to examples 1 to 5 and Pt/C for comparison before exposure to a negative bias potential (Figure 13a) and thereafter (Figure 13b).
Figure 14a for MnCo/g-C₃N₄, Figure 14b for MnCu/g-C₃N₄, Figure 14c for MnFe/g-C₃N₄, Figure 14d for g-C₃N_{4 Melamine} and Figure 14e for Pt/C show the results of chronoamerometry to determine long term stability of the inventive materials.
Figures 15a and Fugure 15b show the XPS spectra, in particular C 1s and N 1s spectra for characteristic binding energies for MnCo/g-C₃N₄ prepared according to example 1 and g-C₃N_{4 Melamine} prepared according to example 5.

### Detailed description of the Invention

The invention also encompasses all combinations of preferred embodiments, ranges parameters as disclosed hereinafter with either each other or the broadest disclosed range or parameter.

Whenever used herein the terms "including", "for example", "e.g.", "such as" and "like" are meant in the sense of "including but without being limited to" or "for example without limitation", respectively.

As used herein modified or modification with regard to carbon nitride materials shall mean modification by or modified by incorporation of hydrogen. The incorporation of hydrogen, without wanting to be bound by theory, is assumed to occur as explained in more detail below. Synonymously for "modified" the term "activated" is used herein as well and reflects the conversion of the carbon nitride material into a highly active electrocatalyst by the inventive exposure process.

As used herein a liquid protic medium means any liquid medium comprising compounds having a pKa measured in or normalized against an aqueous scale at 20 °C of 20 or less, preferably 16 or less. A preferred liquid protic medium is a liquid aqueous medium having a pH of from -1 to 15, preferably -1 to 14, more preferably -1 to 4, even more preferably 0 to 4 and yet even more preferably 0 to 1 measured or normalized to standard conditions. Further, a liquid aqueous medium is preferably a medium comprising at least 80 wt%, preferably at least 90 wt% of water, the remainder being selected from salts, bases or acids, preferably salts or acids.

In another embodiment the aqueous medium may contain up to 10 wt% or alcohols such as for example methanol and ethanol.

Suitable acids include inorganic acids such as for example sulfuric acid and hydrochloric acid or organic acids, whereby inorganic acids are preferred.

Examples of liquid protic media are hydrochloric acid or aqueous sulfuric acid, a preferred example is 0.5 molar aqueous sulfuric acid.

As used herein, the term 'overpotential' is referred to as the difference between the potential at which a catalyst operates at a specific current under specific conditions and the equilibrium potential or Nernst potential for a given reaction (also referred to as the thermodynamic potential) . As used herein the overpotential is given at a current density of 10mA*cm⁻² and is determined or normalized against the reversible hydrogen electrode (RHE) in 0.5 molar (M) aqueous sulfuric acid at 20 °C by linear sweep voltammetry (LSV) with a scan rate of 2 mV*s⁻¹ for the hydrogen evolution reaction (HER) and abbreviated as η₁₀. Therefore the overpotential according to these conditions is always negative and means that a higher negative voltage is required to induce HER.

As used herein, the term "current density" refers to the amount of electric current passing per unit of cross-section area as is typically given in (mA/cm²).

It is known to those skilled in the art that the current density is mainly determined by surface reactions and thus depends on the density of active species (herein the modified carbon nitride materials) on such surfaces. However, since any exposure times and parameters refer to the initial overpotential which is likewise dependent on said density of active species the parameters defining the product are independent of the density of active species.

However, in a preferred embodiment the exposure is performed using a minimum thickness and loading of the surface as defined further below.

As used herein, the term "Tafel slope" refers to the relationship between the overpotential as defined above and the logarithmic current density as determined from the Tafel plot.

As used herein, the term "electrode" refers to an electrical conductor used to contact a non-metallic part of a circuit, in particular an electrolyte.

As used herein, the term "electrochemical cell" refers to a device capable of either generating electrical energy from chemical reactions or using electrical energy to cause chemical reactions.

### Carbon Nitride Materials

The modified carbon nitride materials according to the invention are obtainable from carbon nitride materials.

As used herein carbon nitride material denotes any material comprising graphitic carbon nitride, usually also abbreviated as g-C₃N₄ whether doped or undoped. Doping introduces additional functional groups, metals, metal salts or metal complexes or other compounds for example into the pores of the graphitic carbon nitrides thereby typically modifying the electronic structure as well as improving the material's catalytic and electronic properties.

The term further encompasses graphitic carbon nitride in any morphology, shape or appearance, i.e. whether crystalline or amorphous and any indermediate form, whether monolayered or multi-layered, whether in form of two-dimensional essentially planar nanosheets with a thickness of up to 100nm, distorted twisted sheets, scrolled sheets, fibres, rod-shaped forms or tubular forms.

Graphitic carbon nitrides typically form structures comprising a plurality of heptazine units of formula (I) 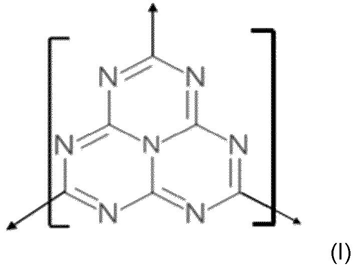 or a plurality of triazine units of formula (II) 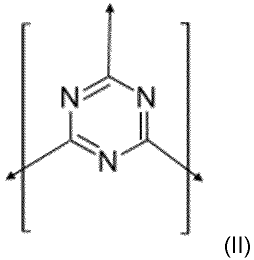 or a plurality of heptazine units of formula (I) and a plurality of triazine units of formula (II), preferably a plurality of heptazine units of formula (I)
wherein
- the arrows: each denote a bond to a secondary or tertiary amino group through which two or three structural units of formula (I) and/or formula (II) are linked together or
denote a bond to an end group.

Such end groups may for example include hydrogen, amino groups (-NH₂), cyano, cyanamino or -N=C=NH groups.

Further, since structural defects may be present in graphitic carbon nitrides these defects as well as the end groups may undergo oxidation or hydrolysis when in contact with air and/or humidity. Therefore the inventive carbon nitride compositions may also comprise a small content of hydrogen and oxygen e.g.stemming from hydroxyl or carbonyl groups.

It is known to those skilled in art, that due to their insolubility in commonly used media and their preparation processes whereby precursor materials are condensed and/or decomposed and/or rearranged, the carbon nitride materials, depending on their preparation conditions and precursor materials may have different properties such as band gap, degree of condensation, crystallinity, and structural defects, porosity, elemental composition, UV adsorption as well as different reactivities.

Therefore, the graphitic carbon nitrides may not only be characterized by their specific properties but may alternatively or additionally also be defined by their preparation process.

The literature discloses numerous processes for the preparation of graphitic carbon nitrides which include
a) Thermal Polymerization or Thermal Condensation of precursor materials. This process includes heating the precursor materials in one, two or more steps to or at temperatures ranging from 500 °C to 650 °C in an atmosphere that is essentially free of oxygen, typically first leading to the formation of a polymeric structure such as melon, which further condenses into g-C₃N₄.
b) Chemical Vapor Deposition (CVD) whereby precursor materials are deposited onto a substrate under controlled temperature and pressure conditions. For example, a mixture of cyanuric trichloride and melamine can be used as precursor materials, which are vaporized and deposited onto a substrate at elevated temperatures to form g-C₃N₄ layers.
c) Solvothermal and Hydrothermal Methods which inlcude dissolving the precursors in a solvent and subjecting the solution to high temperatures and pressures e.g. in an autoclave. This process facilitates the formation of g-C₃N₄ with various morphologies and enhanced crystallinity. Common solvents include water, ethanol, and other organic solvents.
d) Electrodeposition on a suitable conducting or semi-conducting substrate such as silicon whereby specific precursor materials may include cyanuric trichloride and melamine.
e) Template-Assisted Synthesis which uses a sacrificial template to guide the formation of g-C₃N₄ with specific structures. The template is typically removed after the synthesis, leaving behind a porous or nanostructured g-C₃N₄. Templates may include silica, alumina, or other nanostructured materials.

The precursor materials may be any known material or compound that can be converted into a carbon nitride. Typically such materials and compounds include nitrogen containing compounds comprising C-N single or double bonds and typically lack C-C bonds. Any oxygen and sulfur atomes present in such compunds are typically eliminated upon heating as H₂0 and H₂S respectively.

Preferred precursor materials for graphitic carbon nitride include melamine, guanidine, cyanuric acid, cyanuric trichloride, dicyandiamide, urea, thiourea, 5-amino-tetrazole, 3-amino-1,2,4-triazole, 3-amino-1,2,4-triazole tetramer, 3-amino-1,2,4-triazole-5-thiol, cyanuric acid and any mixtures of the aforementioned materials, whereby melamine, guanidine, cyanuric acid, dicyandiamide, urea and any mixtures thereof are preferred and melamine and dicyandiamide are particularly preferred.

Therefore the term graphitic carbon nitride comprises also compounds obtainable by above mentioned processes using the precursor materials described above.

As used herein the term carbon nitride materials further comprises graphitic carbon nitrides comprising intercalated metals, metal cations, metal complexes or metal complex cations, copolymers or other organic materials provided that the type and amount of such intercalated materials is selected and suited not to substantially impede the modification process according to the invention.

In the literature such carbon materials are frequently referred to as doped carbon nitrides.

Therefore, in one embodiment the term carbon nitride materials further comprises for example graphitic carbon nitrides comprising a plurality of heptazine units of formula (I) as defined above and/or structural units of formula (III) 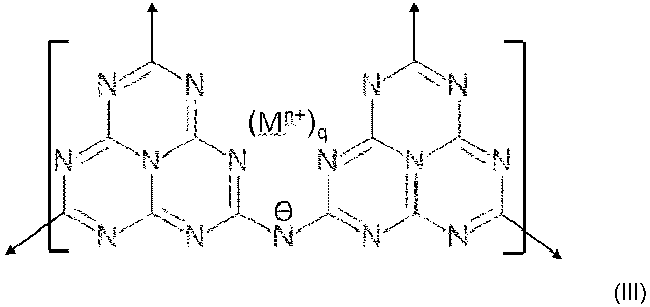 wherein
- the arrows: each denote a bond to a secondary or tertiary amino group through which two or three structural units of formula (I) are linked together or
a bond to an end group,
- Mⁿ⁺: denotes an n-valent cation with n being 1, 2 or 3 preferably 1 or 2 and more preferably 1
- q: is 1/n.

In the literature these graphitic carbon nitrides are also referred to as poly(heptazine imides).

In one embodiment Mⁿ⁺ represents, H⁺, Li⁺, Na⁺, K⁺, Rb⁺, Cs⁺, Ag⁺, NH₄⁺, Zn(OH)⁺, Mg²⁺, Ca²⁺, or a transition metal cation or mixtures thereof.

In one embodiment Li⁺, Na⁺, K⁺, Zn(OH)⁺, Mg²⁺ and Ca²⁺ or mixtures thereof are preferred and K⁺ is even more preferred.

In another embodiment transition metals are preferred, whereby Fe²⁺, Mn²⁺, Co²⁺, Ni²⁺, Cu²⁺, Cu⁺ and combinations thereof are even more preferred.

Several methods exist in order to identify and characterize graphitic carbon nitrides and thus the carbon nitride materials employed in the invention.

In one embodiment the carbon to nitrogen wt.-ratio (C/N weight ratio) within graphitic carbon nitrides is typically from 0.55 to 0.70, preferably from 0.60 to 0.66.

The content of metals with regard to the total mass of the graphitic carbon nitrides is for example from 0 to 5 wt.%, preferably from 0 to 2 wt. %.

In a specific embodiment where doping with transition metal salts is applied the content of metals with regard to the total mass of the graphitic carbon nitrides is for example from 0.1 to 2 wt.%, preferably from 0.2 to 1 wt. %.

In one embodiment the graphitic carbon nitrides exhibit a BET surface of 10 to 500 m²/g, preferably of 100 to 400 m²/g and more preferably of 140 to 350 m²/g as measured by nitrogen adsorption at 77 K in accordance with DIN 66131.

In one embodiment the graphitic carbon nitrides exhibit a pore volume (Vₚ) of 0.05 to 0.60 cm³/cm³ or a porosity (ϕ) of 5 to 60 %, preferably a pore volume (Vₚ) of 0.05 to 0.50 cm³/ cm³ or a porosity (ϕ) of 5 to 50 % and more preferably a pore volume (Vₚ) of 0.20 to 0.45 cm³/ cm³ or a porosity (ϕ) of 20 to 45 % each as measured by gas adsorption (BET) experiments in accordance with DIN 66131 using liquid nitrogen at 77 K.

In a specific embodiment the graphitic carbon nitrides are prepared by a process comprising at least the steps of
i) mixing nitric acid, melamine and optionally at least one transition metal salt in an aqueous medium thereby forming a precipitate
ii) separating the precipitate formed from the aqueous medium and
iii) heating the precipitate at a temperature of 400 to 700 °C, preferably 450 to 600 °C and more preferably 500 to 600 °C for 30 minutes or more, preferably 1 hour or more, more preferably 1 hour to 24 hours and even more preferably 1.5 hours to 4 hours, for example 2 hours under substantial exclusion of oxygen. Longer reaction times are possible but virtually don't add any advantage.

In step i) the amount of nitric acid is selected to be sufficient to protonate melamine for example from 0.1 to 1 mol of nitric acid per mol of melamine.

In step i), optionally at least one transition metal salt is employed. Suitable transition metal salts include transition metal chlorides, bromides, iodides and nitrates including the respective hydrates and water free forms. Chlorides, bromides, iodides and nitrates of iron, manganese, cobalt, nickel and copper are preferred, those of Fe²⁺, Mn²⁺, Co²⁺, Ni²⁺, Cu²⁺, Cu⁺ are even more preferred.

In a specific embodiment in step a) the weight ratio of the one or more transition metal salts calculated, where applicable, on their water free content and melamine is for example from 1:200 to 1:500, preferably from 1:250 to 1:350.

In step i) an aqueous medium is used. An aqueous medium denotes a medium comprising water at a content of 5 to 100 wt.%, preferably 10 to 70 wt.% and more preferably 20 to 40 wt.%, the remainder being a water miscible organic solvent.

The water miscible solvent may be for example but preferably selected from C₁-C₄ mono- and dialcohols such as methanol, ethanol isopropanol and n-butanol, whereby ethanol is preferred.

A preferred aqeous medium is a mixture of ethanol with a content of 60 to 80 wt.% and water with a content of 20 to 40 wt.% based on the total weight of the aqeous medium.

In step i) the order of addition is generally not decisive. In one embodiment nitric acid is added to a mixture of melamine and optionally at least one transition metal salt in an aqueous medium thereby forming a precipitate.

In step i) a precipitate is formed which is then separated in step ii).

Separation can be effected by any means known to those skilled in art for the separation of solids from liquids, including filtration, sedimentation and decantation, centrifugation and the like.

In an optional step iia) the separated precipitate is washed once or more. Washing can be performed with the aqueous medium applied in step i)

In step iii) the separated precipitate is heated. In one embodiment heating to the given temperature in step c) is performed at a rate of 0.5 to 40.0 °C/min, preferably at a rate of 0.5 to 35.0 °C/min.

To avoid oxidative degradation step iii) is carried out under substantial exclusion of oxygen.

As used herein substantial exclöusion means a partial pressure of oxygen of 20 hPa or less, preferably, 5 hPa or less, more preferably 1 hPa or less.

Suitable inert gases include nitrogen or argon gas.

The pressure conditions are not specifically limited, and the pressure in step b) may be from 100 hPa to 50 MPa, preferably from 900 hPa to 1 MPa, even more preferred under ambient pressure.

Steps i) to iii) can further be carried out in any vessel suitable for that purpose. This includes ceramic crucibles, glass or quartz ampoules as long as these vessels are sufficiently stable and inert under the reaction conditions employed.

Preferred compounds which are fore example obtainable by the above described process are graphitic carbon nitrides comprising Mn, Co, Cu or **Fe** ions or a mixture of at least two of the aforementioned ions in an amount of at total 0.5 to 3.5 wt.% of the carbon nitride material, preferably 1 to 2.5 wt.%. Examples include graphitic carbon nitrides comprising Mn and Co ions, hereinafter abbreviated as MnCo/g-C₃N₄, graphitic carbon nitrides comprising Mn and Cu ions, hereinafter abbreviated as MnCu/g-C₃N₄, graphitic carbon nitrides comprising Mn and **Fe** ions, hereinafter abbreviated as MnFe/g-C₃N₄ and graphitic carbon nitrides comprising Mn ions, hereinafter abbreviated as Mn/g-C₃N₄. Specific examples of such carbon nitride materials are further described and characterized in the experimental part.

### Negative bias potential

According to the invention the carbon nitride materials are exposed to a negative bias potential in a protic medium for the exposure times as specified above, thereby forming the inventive modified carbon nitride materials.

As used herein exposure to a negative bias potential in a liquid protic medium shall mean the application of an electrochemical potential that is in the range of from 100mV, preferably 50mV below the overpotential as defined or normalized above to the equilibrium potential (also referred to as Nernst potential) of the hydrogen evolution reaction (HER).

In another embodiment, the negative bias potential is in a voltage range from 100mV, preferably 50mV below the overpotential to 200 mV, preferably 100 mV above the overpotential.

In one embodiment the negative bias potential applied is in the range of -0.75 V to -0.00 V, preferably in the range of -0.65 V to -0.3 V, and even more preferably 0.65 V to 0.40 V, for example -0.60 V versus RHE.

Though without wanting to be bound by theory it is a major finding of the invention that the application of a negative bias potential in a liquid protic medium in the ranges defined above induces the chemical bonding of proton-electron pairs whereby protons migrate into the carbon nitride material and locally recombine with the electrons offered and provided by the application of the negative bias potential.

It was found that up to three proton-electron pairs can be stored in the structure odf the modified carbon nitride material which indicates, again without wanting to be bound by theory, a partial covalent binding in a regular, non-conjugation breaking higher energy level as also observed for organic redox systems such as riboflavin.

In the literature hydrogen storage within electrocatalysts is frequently also referred to as under-potential absorbed hydrogen (H_{UPD}), a term that will be also used hereinafter even though the type of bonding might be different.

At the applied negative bias potentials this occurs virtually without hydrogen gas (H₂) evolution and thus allows modification of the carbon nitride materials by formation of H_{UPD}, which in turn activates the carbon nitride material and significantly lowers the overpotential required for hydrogen gas evolution during the exposure time up to saturation with H_{UPD}.

Any exposure to more negative voltage as typically done with catalysts directly used in electrochemical applications would favour and induce immediate hydrogen gas evolution without formation of H_{UPD} and thus without the significant lowering of overpotential as observed for the modified carbon nitride material according to the invention.

In cyclovoltammetry (CV), the start of aforementioned activation and modification of carbon nitride materials is visible as a current peak where hydrogen storage reaches a maximum.

For comparision it is noted that the overpotential of carbon nitride materials using the inventive process can be reduced to values that are currently only overserved for platinum materials or even lower.

For the avoidance of any doubt for RHE the term overpotential means the requirement of more negative voltage for HER, and higher overpotentials even more negative voltage.

High overpotentials are undesirable since finally the additial negative Voltage required for HER compared to the Nerst Potential is lost as heat.

It I apparent to those skilled in the art that the negative bias potential to be applied is dependent on pH, temperature, the carbon nitride material to be modified.

Typically, the longer the time of exposure to the negative bias potential is the higher the density of adsorbed proton-electron pairs or under-potential absorbed hydrogen becomes.

A further trend is that the more negative the negative bias potential is within the limits defined above, the faster the activation and modification is which means that a carbon nitride material having an initial overpotential of -0.5 V is activated much faster at a negative bias potential of -0.5 V compared to exposure to a a negative bias potential of -0.2 V.

It is further apparent that a higher concentration of protons (H⁺) and thus a lower pH allows shorter exposure times. However it is important to note that the carbon nitride materials are chemically very stable and may be modified at any pH, whereby the range of from pH -1 to 4 measured or normalized to standard conditions is preferred and the range from 0 to 1 is even more preferred.

The temperature during exposure is not critical to the extent the protic medium remains liquid under the chosen conditions and may for example be from -20 °C to 100 °C, preferably from 0 to 80 °C, more preferably 0 °C to 50 °C and even more preferably 10 °C to 30 °C , for example at ambient temperature.

Despite the variables described above, the desired pH, temperature, exposure time and degree of activation and modification of the carbon nitride material employed up to saturation with H_{UPD} may be easily determined by very few orienting examples.

Once saturation with H_{UPD} is achieved longer exposure times are possible, however add no further advantage.

To expose the carbon nitride materials to ta negative bias potential in a liquid protic medium the carbon nitride materials may optionally be mixed with additional components to form a catalyst material which is then used to prepare electrodes, catalyst-coated membranes (CCMs) or membrane-electrode-assemblies (MEAs).

In one embodiment the catalyst materials contain from 1 to 100 wt.% of carbon nitride materials as defined above, preferably from 50 to 100 wt.%, more preferably from 90 to 100 wt. %, even more preferably from 95 wt. % and yet even more preferably from 98 to 100 wt.%. In one embodiment the electrode material consists of the carbon nitride material as defined above.

The remainder to 100 wt.% in the catalyst materials, if present, may include additional components which include but are not limited to:
- binders such as sodium carboxymethylcellulose (CMC) and polyvinylidenfluoride (PVDF)
- electrically conductive carbon materials. Such carbon materials include carbon nanotubes, graphene derivatives, carbon black or graphitised carbon blacks or other commercially available carbon blacks such as acetylene blacks, all of the aforementioned in any form, e.g. in form of foams, sheets or meshes or any type of particles.
- Ion conducting polymers such as a proton conducting polymer including perfluorosulphonic acid polymers like Nafion^{®} (Chemours Company), Aciplex^{®} (Asahi Kasei), Aquivion^{®} (Solvay Specialty Polymer), Flemion^{®} (Asahi Glass Co.), or ionomers based on partially fluorinated or non-fluorinated hydrocarbons that are sulphonated or phosphonated polymers, such as those available from FuMA-Tech GmbH as the fumapem^{®} P, E or K series of products, JSR Corporation, Toyobo Corporation,
- Additional co-electrocatalysts (other than the carbon nitride materials) such as... metal oxides or mixed oxides, in particular a conductive mixed oxide such as niobia-doped titania, phosphorus-doped tin oxide and mixed platinum group metal oxides or mixed metal oxides, carbides such as tungsten carbide, molybdenum carbide or titanium carbide, nitrides, in particular conductive nitrides such as titanium nitrides or titanium aluminium nitride.

The catalyst materials may then be for example be
a) shaped to form an electrode or
b) applied to the surface of a support material, preferably a conductive support material to form a layered electrode, a catalyst-coated membrane or a membrane-electrode-assembly
using techniques known per se to those skilled in the art.

For variant a) such techniques include pressing like uniaxial (die) pressing or isostatic pressing, further injection molding, extrusion, slip casting, gel casting, tape casting and sintering.

In variant b) the catalyst materials are applied to the surface of a support material, preferably a conductive support material. To do this the catalyst material is for example dispersed in an aqueous and/or organic solvent to first prepare a catalyst ink or catalyst paste.

Conductive support materials include metals e.g. in form of sheets, foils, foams, sponges or meshes, or electrically conductive carbon materials as defined above e.g. in form of foams, foils, sheets or meshes.

Organic solvents include N-methyl-2-pyrrolidone (NMP), acetone, n-butanon, C₁-C₈ alcohols such as methanol, ethanol, isopropanol and n-propanol and other organic solvents known to those skilled in the art to be suitable for that purpose.

If required, particle break-up is carried out by methods known in the art, such as high shear mixing, milling, ball milling, passing through a microfluidiser etc. or a combination thereof, to achieve a suitable particle size distribution.

After preparation of the catalyst ink, the catalyst ink or catalyst paste is deposited onto a support material, preferably a conductive support material.

The catalyst ink or catalyst paste may be deposited by any suitable technique known to those in the art, including but not limited to gravure coating, slot die coating, extrusion coating, volume casting, screen printing, rotary screen printing, inkjet printing, spraying, painting, bar coating, pad coating, gap coating techniques such as knife or doctor blade over roll, and metering rod application.

The deposition may be for example effected onto support material, preferably conducting support materials such as carbon electrodes or carbon materials as listed above and for example used in form of foams, sheets and meshes , metals e.g. in form of foams, sheets, and meshes, gas diffusion layers (GDLs), current collectors, ion-conducting membranes, blank PTFE sheets, release papers or separator plates.

In one embodiment and typically a drying process is subsequently applied to remove the water and o/or organic solvents of the catalyst ink or paste.

Thereby an electrode comprising a carbon nitride materials is prepared which then can be employed in the inventive modification process.

For the avoidance of doubt, the term "exposing a carbon nitride material to a negative bias potential" also encompasses "exposing an electrode comprising or consisting of a carbon nitride material to a negative bias potential".

The characteristics of the resulting electrode comprising the carbon nitride materials, such as the carbon nitride material loading or where layers are formed the layer thickness, porosity, pore size distribution, average pore size and hydrophobicity will depend and be selected on whether it is being used as the anode or cathode.

In one embodiment where the electrode is used as a cathode and where layers are formed the catalyst layer thickness is for example at least 10 nm, preferably from 50 nm to 0.5 mm, more preferably from 50 nm to 200 µm. Higher catalyst layer thicknesses typically add no advantage.

In another embodiment the loading of the electrode, preferably where used as a cathode is for example at least 0.1 mg/cm², preferably from 0.5 to 500 mg/cm², more preferably 1 to 200 mg/cm², and yet even more preferably from 1 to 20 mg/cm². Higher catalyst loadings typically add no advantage.

As used herein "loading" means the amount of carbon nitride material brought onto or coated onto or bound to the surface of the support material.

Likewise catalyst-coated membranes (CCMs) or membrane-electrode-assemblies can be prepared or employed and the aforementioned features in particular as regards loading and layer thickness for electrodes apply to catalyst-coated membranes (CCMs) or membrane-electrode-assemblies as well. The resulting electrodes, catalyst-coated membranes (CCMs) or membrane-electrode-assemblies comprising the carbon nitride materials can then be exposed to the negative bias potential which can for example be effected in any vessel or cell assembly including electrolysis cells known to those skilled in the art.

In one embodiment the exposure is performed using a three-electrode cell, for example a three-electrode cell comprising a counter electrode e.g. a platinum wire, a reference electrode e.g. Ag/AgCl in 0.4 M KCI, and a working electrode comprising the carbon nitride material to be exposed.

Thereby, the carbon nitride materials are exposed to a negative bias potential in a liquid protic medium.

For the avoidance of doubt exposure of carbon nitride materials to a negative bias potential also includes exposure of electrodes comprising such carbon nitride materials to a negative bias potential.

As a result, the modified carbon nitride materials according to the invention are obtained. They may be besides their process for preparation characterized by the following parameters:
The modified carbon nitride materials according to the invention typically exhibit an absolute maximum for the range of 280 to 290 eV in the C 1s spectrum of 283.5 ± 0.3 eV as determined by XPS.

Further the modified carbon nitride materials according to the invention typically exhibit an absolute maximum for the range of 395 to 405 eV in the N 1s spectrum of 400.2 ± 0.3 eV as determined by XPS.

Further the modified carbon nitride materials according to the invention typically comprise 0.2 to 1.5 wt. % of underpotential deposited hydrogen (H_{UPD}) as determined by cyclic voltammetry as further outlined in the experimental part.

In another embodiment the Tafel Slope of the modified carbon nitride materials according to the invention is typically from 50 to 200 mV*dec⁻¹, preferably 70 to 150 mV*dec⁻¹ and even more preferably 80 to 140 mV*dec⁻¹.

In another embodiment the modified carbon nitride materials according to the invention typically exhibit an overpotential η₁₀ of -0.005 to 0.300 V, preferably -0.005 to -0.200 V and even more preferably -0.007 V to -0.100 V.

In another embodiment the modified carbon nitride materials according to the invention typically exhibit an overpotential η₁₀ of -0.005 to 0.300 V, preferably -0.005 to -0.200 V and even more preferably -0.007 V to -0.100 V.

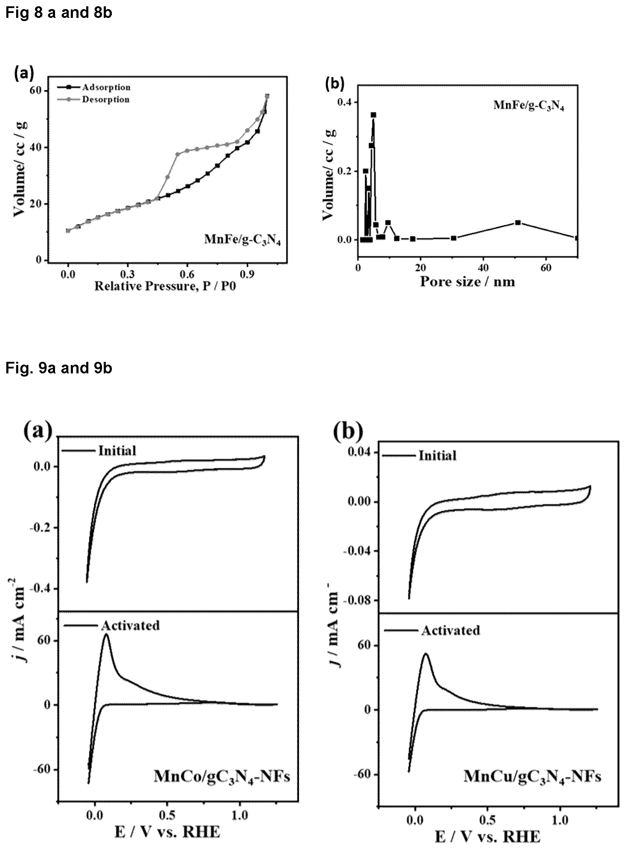

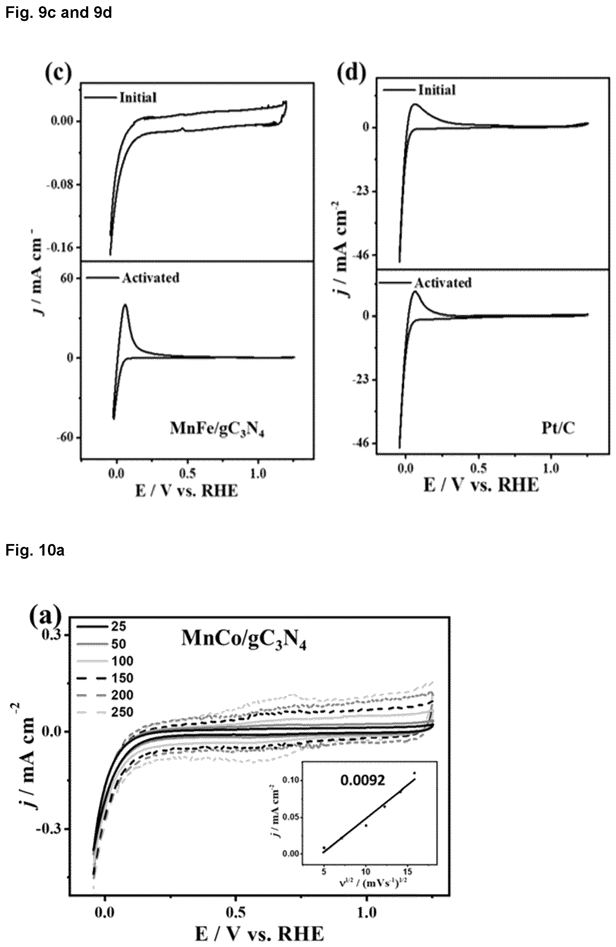

The modified carbon nitride materials typically contain stored charges of bonded proton-electron pairs or H_{UPD}. The stored charge density can be measured by integrating the H_{UHD} peak observed in the cyclic voltammogram as shown for illustration in the experimental part and figures 9a, 9b and 9c, lower graph.

In one embodiment the modified carbon nitride materials exhibit a stored charge density Q_{H} of 6 to 40 mC*cm⁻², preferably 8 to 35 mC*cm⁻² as measured by cyclic voltammetry.

In one embodiment the current density at a potential of -0.74 V against RHE if measured in 0.5 molar aqueous sulfuric acid at a layer thickness of at least 5 micrometer, preferably 5 micrometer to 500 micrometer, is from 100 to 1,500 mA/cm², preferably 200 to 1,500 mA/cm² as determined by LSV at scan rate of 2 mV*s⁻¹.

The electrodes, catalyst-coated membranes (CCMs) or membrane-electrode-assemblies comprising the modified carbon nitride materials as obtainable after exposure to the negative bias potential are also encompassed by the invention.

The invention further comprises electrolyzers and fuel cells comprising the inventive modified carbon nitride materials and/or electrodes comprising the same.

Preferred electrolyzers are water electrolyzers.

It was found that the modified carbon nitride materials as well as the electrodes, electrolytic cells, catalyst-coated membranes (CCMs) or membrane-electrode-assemblies comprising the same are quite insensitive to salts and soluble pollutants.

Therefore, in some embodiments, the water source for the inventive electrolyzers are selected from the group comprising tap water, distilled water, bidistilled water, deionized water, deionized distilled water, reverse osmosis water, and/or other water such as brackish water, which is preferably filtered before use to reduce the amount of floating or suspended particles.

In another embodiment, the water is seawater, which prevents the necessity of freshwater usage. Preferably the seawater has a salinity of 0.1-10 wt.%, preferably 1-9 wt. %, 2-8 wt.%, 3-7 wt.% based on a total weight of the seawater.

In one embodiment, the seawater is buffered seawater. The buffer can be any suitable buffer system including but not limited to a sodium borate buffer, a tri-citrate buffer, and a phosphate buffer. In a preferred embodiment, the seawater has a pH of 8 to 10, or about 8.5. The buffer is **added** to prevent precipitation of salts on the electrodes and corrosion.

Such electrolysers include alkaline electrolysers and so-called PEM water electrolysers whereby PEM stands for polymer electrolyte membrane. PEM electrolysers are able to operate at considerably higher current densities and at lower specific energy consumption compared to conventional alkaline electrolysers giving the advantage of higher utilisation of the equipment and reduced production costs and are therefore preferred.

The cell voltage applied in the inventive PEM electrolyzers comprising the modified carbon materials is typically from 1.6 to 4.0 V at operated at a current density of 1 to 5 A/cm².

Since in the PEM water electrolyser, the reduction of protons (H⁺), i.e. the HER occurs , at the cathode. Therefore the inventive electrodes are preferably used as cathodes. The electrode may further contain gas diffusion layers mounted on both sides of the electrode. Such Gas diffucesion layers are known to those skilled in the art.

In one embodiment the PEM electrolyzers contain a membrane-electrode-assembly. Typically such membrane-electrode-assemblies are prepared by preparing and applying an inventive ink as disclosed above either directly to a membrane or first to a gas diffusion layer which is then contacted with the membrane.

Such manufacturing processes are known per se and are likewise used in membrane-electrode-assemblies in fuels cells as for example disclosed in US 5,861,222A, US 5,861,222, US 6,309,772 B, US 6,309,772 and US 6,500,217 B.

The present invention provides novel modified carbon nitride materials which show unique properties in electrochemical hydrogen storage and hydrogen evolution reactions. The exposure to a negative bias potential allowed to prepare novel modified carbon nitride materials with very low overpotential, enabling very high current densities, HER rate as well as high stability for at least 15 days and 10.000 cycles which showed to be even higher than for platium on carbon and thus electrocytalysts with unprecedented electrochemical properties

Additionally, the inventive materials allow storage of up to 1.5 wt.% of hydrogen at ambient pressure and room temperature.

The literature cited hereinabove is the following:
[1] Wu H, Feng C, Zhang L, Zhang J, Wilkinson DP. Non-noble Metal Electrocatalysts for the Hydrogen Evolution Reaction in Water Electrolysis. Electrochem. Energy Rev. 2021, 4(3): 473-507.
[2] Ledendecker M, Krick Calderón S, Papp C, Steinrück HP, Antonietti M, Shalom M. The synthesis of nanostructured Ni5P4 films and their use as a non-noble bifunctional electrocatalyst for full water splitting. Angew. Chem. Int. Ed. 2015, 54(42): 12361-12365.
[3] Lin X, Zhang S-N, Xu D, Zhang J-J, Lin Y-X, Zhai G-Y, et al. Electrochemical activation of C-H by electron-deficient W2C nanocrystals for simultaneous alkoxylation and hydrogen evolution. Nat. Commun. 2021, 12(1): 3882.
[4] Wang H, Hou B, Yang Y, Chen Q, Zhu M, Thomas A, Liao Y. Cobalt Nanocrystals Encapsulated in Heteroatom-Rich Porous Carbons Derived from Conjugated Microporous Polymers for Efficient Electrocatalytic Hydrogen Evolution. Small 2018, 14(42): 1803232.
[5] Zhao X, Li S, Cheng H, Schmidt J, Thomas A. Ionic Liquid-Assisted Synthesis of Mesoporous Carbons with Surface-Enriched Nitrogen for the Hydrogen Evolution Reaction. ACS Appl. Mater. Interfaces 2018, 10(4): 3912-3920.
[6] Wang H, Hou B, Yang Y, Chen Q, Zhu M, Thomas A, Liao Y. Cobalt Nanocrystals Encapsulated in Heteroatom-Rich Porous Carbons Derived from Conjugated Microporous Polymers for Efficient Electrocatalytic Hydrogen Evolution. Small 2018, 14(42): 1803232.
[7] Wang L, Si W, Tong Y, Hou F, Pergolesi D, Hou J, et al. Graphitic carbon nitride (g-C3N4)-based nanosized heteroarrays: promising materials for photoelectrochemical water splitting. Carbon Energy 2020, 2(2): 223-250.
[8] Pei Z, Zhao J, Huang Y, Huang Y, Zhu M, Wang Z, et al. Toward enhanced activity of a graphitic carbon nitride-based electrocatalyst in oxygen reduction and hydrogen evolution reactions via atomic sulfur doping. J. Mater. Chem. A 2016, 4(31): 12205-12211.
[9] Rocha GFSR, da Silva MAR, Rogolino A, Diab GAA, Noleto LFG, Antonietti M, Teixeira IF. Carbon nitride based materials: more than just a support for single-atom catalysis. Chem. Soc. Rev. 2023, 52(15): 4878-4932.
[10] Wang X, Maeda K, Thomas A, Takanabe K, Xin G, Carlsson JM, et al. A metal-free polymeric photocatalyst for hydrogen production from water under visible light. Nat. Mater. 2009, 8(1): 76-80.
[11] Zheng Y, Jiao Y, Zhu Y, Li LH, Han Y, Chen Y, et al. Hydrogen evolution by a metal-free electrocatalyst. Nat. Commun. 2014, 5(1): 3783.
[12] B. Salah et al., Synergistically interactive MnFeM (M = Cu, Ti, and Co) sites doped porous g-C3N4 fiber-like nanostructures for an enhanced green hydrogen production. Green Chemistry 25, 6032-6040 (2023).
[13] A. Abdelgawad et al., Template-free synthesis of M/g-C3N4 (M= Cu, Mn, and Fe) porous one-dimensional nanostructures for green hydrogen production. Journal of Electroanalytical Chemistry 938, 117426 (2023).

In the following experimental section, the present invention is illustrated by examples which however not intended to limit the scope of invention.

### Experimental section:

### General Information

### Chemicals:

Manganese (II) chloride monohydrate (MnCl₂·H₂O), copper (II) chloride ((CuCl₂·2H₂O, 99.99 %), cobalt (II) chloride ((CoCl₂·2H₂O), 99.99 %), (melamine, 99 %), urea (≥99 %), thiourea (≥99 %), Iron (II) chloride tetrahydrate (FeCl₂·4H₂O), ethanol ((CH₃CH₂-OH), 99.8 %), commercial Pt/C catalyst (10 wt.% Pt), and nitric acid ((HNO₃), 70 %) were purchased from Sigma-Aldrich Chemie GmbH.

### Analytic methods:

The imaging and bulk composition were analyzed on a transmission electron microscope ((TEM), TecnaiG220, FEI, Hillsboro, OR, USA), equipped with high-angle annular dark-field scanning transmission electron microscopy (HAADF-SEM), and energy dispersive spectrometer (EDX). The Fourier-transform infrared (FTIR) spectrometry was analyzed by PerkinElmer spectrometer model spectrum-400-FT-IR/FT-NIR.The scanning electron microscope (SEM) was conducted on (SEM, Hitachi S-4800, Hitachi, Tokyo, Japan)).

The valence state and surface composition were analyzed with a X-ray photoelectron spectroscopy (XPS) spectra and measured on a Thermo ESCALAB 250 spectrometer equipped with a monochromatic Al Ka line (1486.7 eV).

The XRD analyses were carried out on an X-ray diffractometer (X'Pert-Pro MPD, PANalytical Co., Almelo, Netherlands).

The inductively coupled plasma optical emission spectrometry determined the bulk composition and metal loading on the working electrode (ICP-OES, Agilent 5800).

The N₂-adsorption/desorption isotherms were recorded using a Quantachrome Autosorb 3.01 instrument to measure the surface area by Brunauer-Emmett-Teller (BET) and pore size/volume by Barrett, Elliott P., Leslie G. Joyner, and Paul P. Halenda. "The determination of pore volume and area distributions in porous substances. I. Computations from nitrogen isotherms." Journal of the American Chemical society 73.1 (1951): 373-380.

### Electrochemical measurements:

The HER performance was conducted using cyclic voltammograms (CVs), linear sweep voltammograms (LSV), impedance spectroscopy (EIS), and chronoamperometry (CA) test on Gamry potentiostat (Reference 3000, Gamry Co., Warminster, PA, USA) using a three-electrode cell of Pt wire (3mm) (counter electrode), Ag/AgCl (in 0.4 M KCI, reference electrode), and carbon foam coated with carbon nitride materials accoding to examples 1 to 7 as decribed below (1 x 0.5 cm, working electrode).

The obtained HER currents were normalized to the geometric area of the working electrode after correction against Ohmic potential drop; meanwhile, the potentials were normalized to the reversible hydrogen electrode (RHE) using Equation 1: ${E}_{RHE} = {E}_{Ag / AgCI} + 0.197 V + 0.059 ⋅ pH$ (Equation 1)

The turnover frequency (TOF) was calculated using Equation 2: $TOF = JA / nFN$ (Equation 2)

Where J is the current density (A/m²), A is the electrode surface area (m²), n is the number of electrons transferred per H₂ (n=2 for HER), F is the Faraday constant (96,485 C/mol), and N is the number of moles of metals (mol).

### Electrochemical characterization:

Tafel plots were obtained by plotting the absolute current density logarithmic versus the overpotential from measured liner sweep at a scan rate 2 mV/s at the initial reaction rate. The Tafel slopes were calculated using Equation 3 $β = 2.3 RT / αnF log \left(i/{i}_{o}\right)$ (Equation 3) wherein β is the Tafel slope, R is the universal gas constant, R is an absolute temperature, α is the electron transfer coefficient, F is the Faraday's constant, n is the number of electrons, i is current density, and i₀ is exchange current density when there is no net current flow.

The non-Faradic current density based electrochemically active surface area (ECSA) was determined according to Equation 4: $ECSA = {C}_{dl} / {C}_{s}$ (Equation 4)

Where ECSA is the electrochemical active surface area, Cₛ is the constant specific capacitance (40 µF/cm²), and C_{dl} is the double layer capacitance (µF/cm²). The CV curves were tested at different scan rates, then the current densities were plotted versus the square root of scan rate to get the slope that represents the C_{dl}.

Electrolyte resistance (Rs), charge transfer resistance (Rct), and constant phase elements (CPE) were taken from Electrochemical impedance spectroscopy (EIS) measurements and resulting Nyquist plots by EIS fitting made by Echem Analyst (Gamry potentiostat suite (Gamry 3000)), using the Voigt electrical equivalent circuit.

Stored charge density Q_{H} were calculated via the integration of the H_{UPD} area using Echem Analyst (Gamry potentiostat suite (Gamry 3000).

### Preparation examples

### Examples 1 to 7: Preparation of carbon nitride materials

### Example 1: MnCo/g-C₃N₄

A manganese and cobalt doped graphitic carbon nitride (abbreviated as MnCo/g-C₃N₄) was synthesized with slight modifications according to literature procedures [12] and [13]. Melamine (4 g) was mixed with a mixture of water and ethanol 3/1 v/v ratio (200 mL) comprising MnCl₂ x 2 H₂O (10 mM) and CoCl₂ x 2 H₂O (10 mM) under magnetic stirring at 25 °C for 20 min. An aqueous solution of 30 mL HNO₃ (70 wt.%, 0.2 M) was then added dropwise under magnetic stirring (100 rpm). The precipitate was collected via vacuum filtration using a Whatman Nuclepore Hydrophilic Membrane (0.1 µm Pore Size, 50 mm) and washed with ethanol/H₂O (3/1 v/v) three times to remove impurities. Finally, the obtained powder was dried at 100 °C for 1 h and then annealed at 550 °C (5 °C/min ramping rate) for 2 h under N₂.

### Example 2: MnCu/g-C₃N₄

A manganese and copper doped graphitic carbon nitride (abbreviated as MnCu/g-C₃N₄) was synthesized in full analogy to example 1 but replacing CoCl₂ x 2 H₂O by (CuCl₂·2H₂O).

### Example 3: MnFe/g-C₃N₄

A manganese and iron doped graphitic carbon nitride (abbreviated as MnFe/g-C₃N₄) was synthesized in full analogy to example 1 but replacing CoCl₂ x 2 H₂O by (FeCl₂·4H₂O).

### Example 4: Mn/g-C₃N₄

A manganese doped graphitic carbon nitride (abbreviated as Mn/g-C₃N₄) was synthesized in full analogy to example 1 but omitting CoCl₂ x 2 H₂O.

### Example 5: g-C₃N₄

A metal-free or undoped graphitic carbon nitride (abbreviated g-C₃N₄) was synthesized in full analogy to example 1 but omitting CoCl₂ x 2 H₂O and MnCl₂ x 2 H₂O.

The obtained sample is abbreviated as g-C₃N_{4-Melamine}.

### Examples 6 and 7: g-C₃N_{4 Urea} and g-C₃N_{4 Thiourea}

4 g of urea powder (example 6) was put into an alumina crucible with a cover and then heated in a tube furnace at 550 °C (5 °C/min ramping rate) for 2 h under continuous nitrogen flow. The obtained sample is abbreviated as g-C₃N_{4-Urea}.

Replacing urea by thiourea using the same reaction conditions yielded g-C₃N₄₋ Thiourea (example 7).

### Characterization of carbon nitride materials according to examples 1 to 7

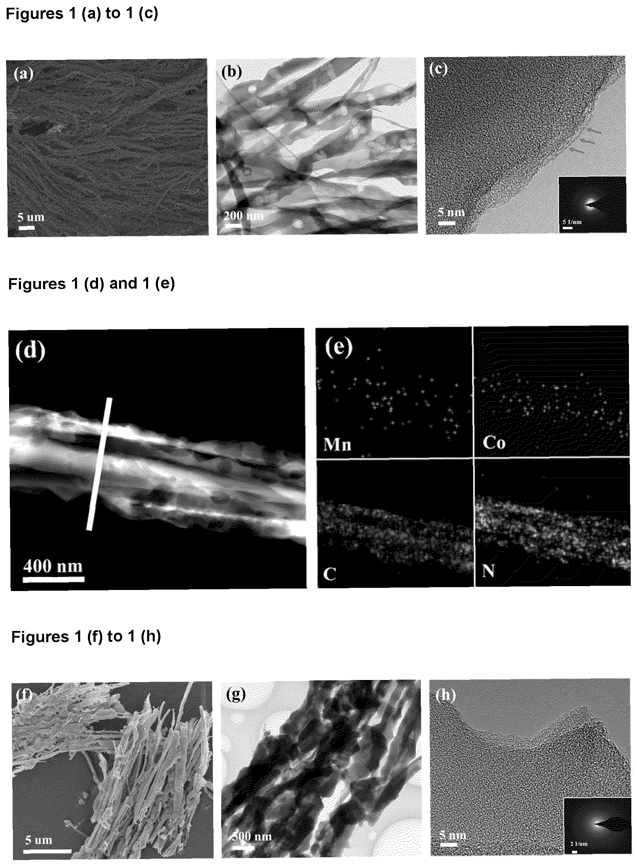

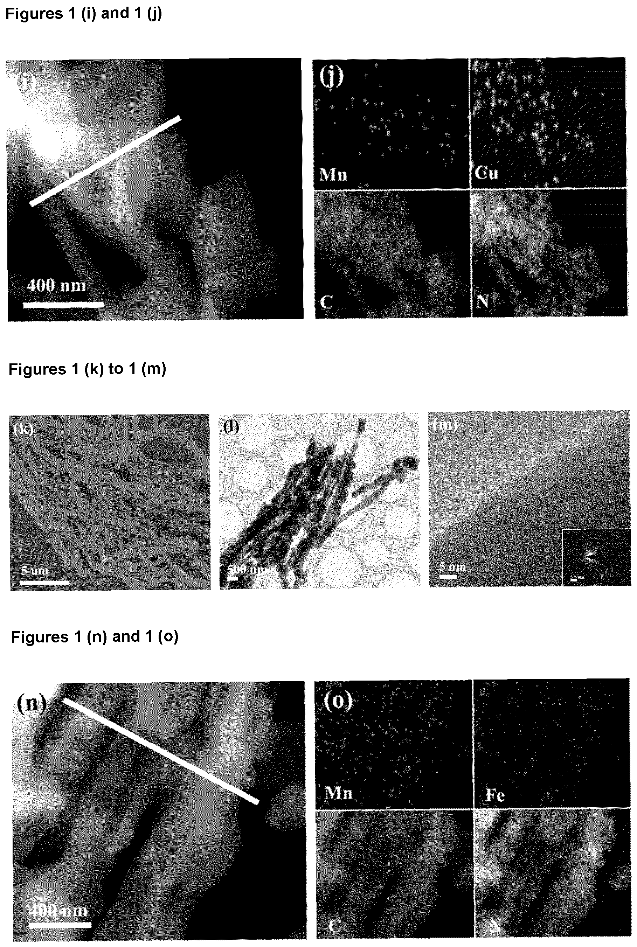

The SEM images (Fig 1 a, Fig 1f and Fig 1k) show the formation of MnCo/g-C₃N₄ (Figure 1a), MnCu/g- C₃N₄ (Figure 1f), and MnFe/g- C₃N₄ (Figure 1k) in form of ultra-long fiber like structures with average length/width of 12µm/70±5 nm, 7.8 µm / 85±6 nm, and 5 µm / 90±6 nm, respectively.

The TEM images of verify the uniformity of the porous necklace-like features. MnCo/g-C₃N₄ discloses MnCo/g-C₃N₄ (Fig. 1b), MnCu/g-C₃N₄ (Fig. 1g) and MnFe/g-C₃N₄ (Fig. 1l) a rougher surface, multiple twists, surface steps, and a high hierarchical porosity. Even though not mandatory, the hierarchical porosity is beneficial for accelerating the transport and adsorption/activation of protons during HER.

The HRTEM images of MnCo/g-C₃N₄ (Fig. 1c), MnCu/g-C₃N₄ (Fig. 1h) and MnFe/g-C₃N₄ (Fig. 1m) confirm their uniformity with a view onto the planes in the middle of the structures and a view on the perpendicular graphitic stacking in the outer zones, as it is typical for TEM of scrolled 2D structures. Notably, no crystalline lattice fringes related to MnM distances were identified, which excludes the presence of larger nanoparticles and supports the expected atomic dispersion inside the inner cavities of g-C₃N₄, as it is typical for atomically dispersed single metal-atom-doped g-C₃N₄ nanostructures.

The regularly spaced density lines if carbon nitride exhibit an adjacent graphitic interlayer spacing of 0.35-0.38 nm assigned to the (002) facet of the g-C₃N₄ structure. This is slightly expanded when compared to the crystalline systems with translational order (d = 0.32 nm), but a typical feature of scolls and tubes.

The selected area electron diffraction (SAED) demonstrates the polycrystalline nature of the scrolls (insets in Figures 1c, 1h, 1m).

The HAADF-STEM images again display 3 the structural details of MnCo/g-C₃N₄ (Figure 1d), MnCo/g-C₃N₄ (Figure 1i), and MnFe/g-C₃N₄ (Figure 1n) including outer rough and twisted surfaces and multiple pores.

MnCo/g-C₃N₄ displayed an even higher porosity and more twisted texture, i.e. the presence of different metal ions is indeed decisive for the finer structural differences.

The elemental mapping validates the uniform distribution of both metals (~1.6-1.7 wt.%) besides C and N in the skeleton structure of MnCo/g-C₃N₄ (Fig. 1e), MnCu/g-C₃N₄ (Figure 1j), and MnFe/g-C₃N₄ (Figures 1o).

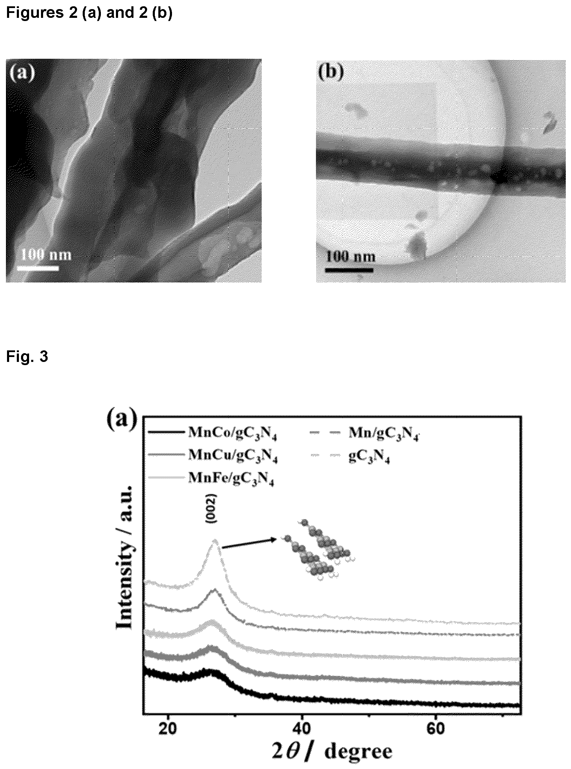

The TEM images of metal-free g-C₃N_{4 melamine} (see Fig. 2a) and Mn/g-C₃N₄ (see Fig. 2b) show porous fiber-like nanostructures with an average length/width of 6µm/106±2 nm and 5.5µm/100±3 nm, but with more porosity than the MnM/g-C₃N₄ nanostructres of examples 1 to 3.

The compounds obtained according to examples 1 to 5 were also analyzed with XRD. A broad diffraction peak at a 2 θ angle of 26.6° is ascribed to the graphitic interlayer stacking of the conjugated aromatic g-C₃N₄ sheets (see Figure 3).

The peaks of MnM/g-C₃N₄ fibers obtained according to examples 1 to 3 are broadened relative to Mn/g-C₃N₄ and g-C₃N₄ of examples 4 and 5 because smaller scrolls possess less long-range translational order of the stacking. The absence of XRD diffraction peaks for pure metal dopants or their oxides (i.e., Cu, Mn, and Fe) is taken as a further indication of a single atom dispersion at low loading amounts in the inner vacancies of g-C₃N₄. The effect of metal single-atoms on the full peak width at half maximum (FWHM), crystallite size, microstrain, and d-spacing of the different g-C₃N₄ are summarized in table 1.

**Table 1: XRD parameters of carbon nitride materials obtained according to examples 1 to 5.**

| Example | 2θ (angle) | d-spacing | FHWM | Crystallite Size only [Angstrom] | Micro Strain only [%] |
|---|---|---|---|---|---|
| 1 (MnCo/g-C₃N₄) | 27.0 | 3.3 | 0.4 | 228 | 0.7 |
| 2 (MnCu/g-C₃N₄) | 26.3 | 3.4 | 0.8 | 113 | 1.5 |
| 3 (MnFe/g-C₃N₄) | 26.1 | 3.4 | 0.6 | 15 | 1.1 |
| 4 (Mn/g-C₃N₄) | 26.8 | 3.3 | 0.1 | 581 | 0.0 |
| 5 (g-C₃N₄)ₘₑₗₐₘᵢₙₑ | 27.1 | 3.3 | 0.1 | 1467 | 0.1 |
| 6 (g-C₃N₄)ᵤᵣₑₐ | 26.1 | 3.4 | 0.6 | 151 | 1.1 |
| 7(g-C₃N₄)ₜₕᵢₒᵤᵣₑₐ | 26.3 | 3.4 | 0.8 | 113 | 1.5 |

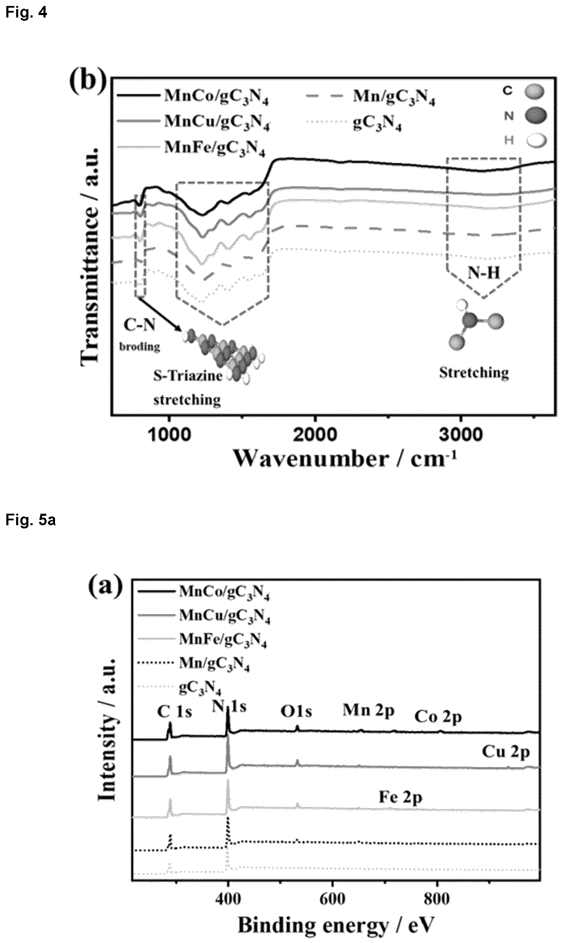

The FTIR analysis reveals the absorption bands attributed to the breathing mode tris-s-triazine rings, but with a noticed broadening in the N-H peak of MnM/g-C₃N₄ pryepared according to examples 1 to 3 compared to g-C₃N₄ₘₑₗₐₘᵢₙₑ prepared according to example 5 plausibly attributed to the nitrogen-metal bond and the coupled change in the binding situation of the N-atoms (see Figure 4).

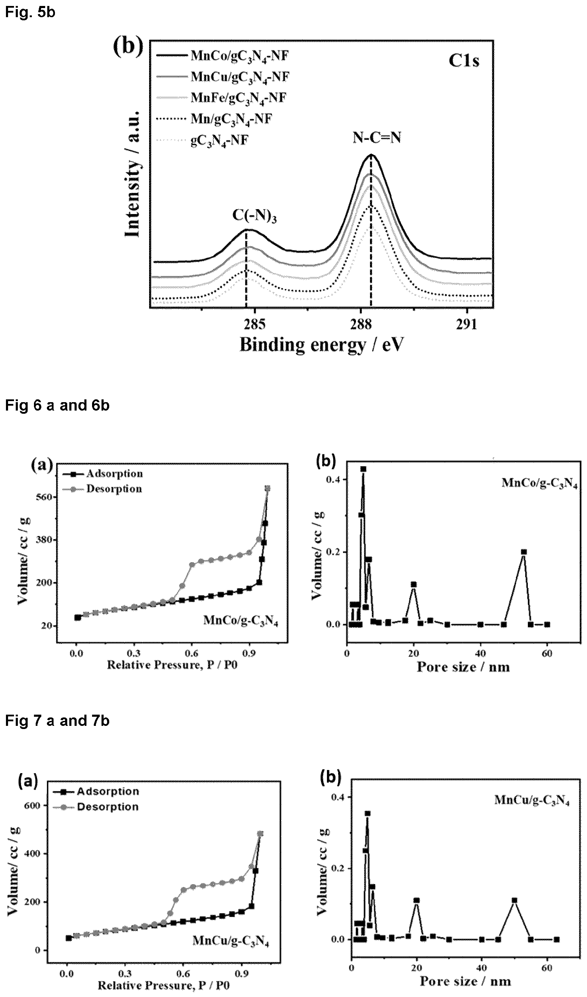

The core-level of valence states and surface composition of MnM/g-C₃N₄ were investigated by XPS analysis (see Figures 5a and 5b). The metal signals are very noisy, due to the low overall concentration, but the existence of metal dopants with various valence states was proven. The C 1s spectra in MnM/g-C₃N₄ showed an intense peak assigned to (N-C=N) at 288.25 eV (see Figure 5b).

The N₂-ads/des isotherms of porous MnM/g-C₃N₄ reflect the characteristics of multimodal pore-size distributions. BET surface areas were determined to 308 m²/g for MnCo/g-C₃N₄, 280 m²/g for MnCu/g-C₃N₄ and 140 m²/g for MnFe/g-C₃N₄, all with pore diameters of 4 to 30 nm and pore volumes of 0.30 to 0.44 cm³/g (see Figures 6a and 6b for MnCo/g-C₃N₄, Figures 7a and 7b for MnCu/g-C₃N₄ and Figures 8a and 8b for MnFe/g-C₃N₄).

### Preparation of electrodes comprising carbon nitride materials according to examples 1 to 7

The carbon foam electrodes were initially cleaned by consecutive washing cycles with acetone/water (2/1, v/v ratio), ethanol/water(2/1, v/v ratio), and water for 30 min each at room temperature and then dried in oven under vacuum at 80 °C for 1 h before coating with an ink comprising the carbon nitride materials prepared according to examples 1 to 7. The inks were prepared by dispersion of the carbon nitride materials prepared according to examples 1 to 7 (2 mg) in an aqueous solution of isopropanol/H₂O/Nafion (5 wt.%) (4/1/0.05 v/v/v). The carbon foam electrodes were coated with 10 µL of the respective ink through volumetric casting and then left to dry in an oven at 80 °C for 2h before utilization.

The exposure of the carbon nitride materials to a negative bias potential was performed in a potentiostat as described above using the electrodes prepared according to the procedure described above.

The negative bias potential applied was always -0.6 V in a time range of from 5 mins to 3 hours or for long term testing for 24 h, but all electrocatalytic tests were conducted on activated and non-activated electrodes.

For comparison, a Pt/C was used as a working electrode.

### Preparation and characterization of modified carbon nitride materials

Activation to obtain the modified carbon nitride materials acccording to the invention was evidenced by a strongly increased current, which however saturated to the values given below.

Once activated, the current response was immediate showing that the structure has changed in a stable fashion.

### Cyclic Voltammography

Initially, the cyclic voltammograms (CVs) curves of MnM/g-C₃N₄ and Pt measured in 0.5 M aqueous H₂SO₄ as electrolyte revealed a quasi-rectangular voltammogram attributed to the capacitive-like proton electorn storageance effect of g-C₃N₄ besides weak peaks assigned to the formation of metal hydrides M-H at high potential and reduction of metal oxides (M-O) at a lower potential
(see Figure 9a for MnCo/g-C₃N₄, Figure 9b for MnCu/g-C₃N₄, Figure 9c for MnFe/g-C₃N₄ and Figure 9d for Pt/C, the latter for comparison).

The peaks in figures 9a to 9c reflect the doping single atom metal centers supported on carbon nitride, and their minor area allows to exclude a doping metal effect for the later observations.

The reference Pt/C sample revealed the typical cyclic voltammogram (CV) characteristics of Pt.

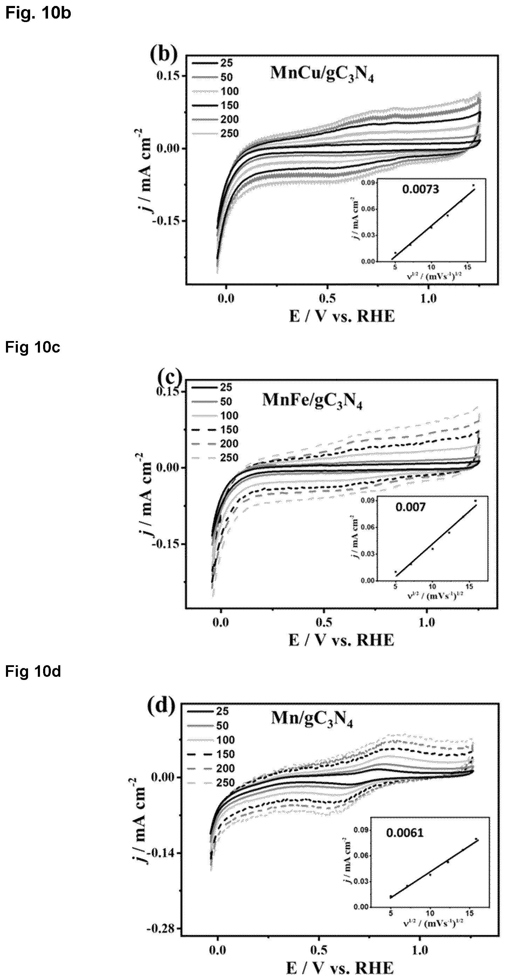

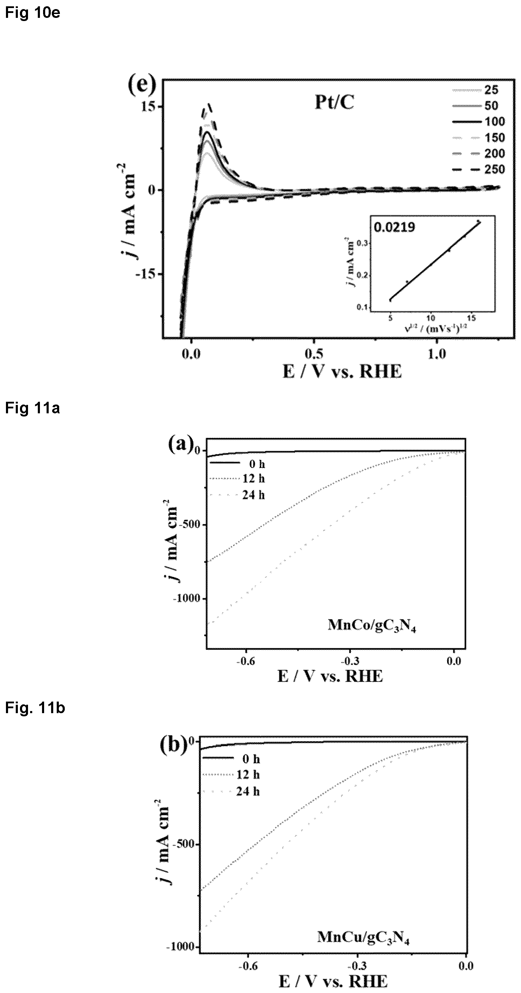

The electrochemical active surface areas (ECSAs) of MnM/g-C₃N₄ according to examples 1 to 3 were in the range of 29.7 to 19.6/cm², and MnCo/g-C₃N₄, was the highest as calculated from measuring the CV at different scan rates (see figures 10a to 10e)

Upon activation the CV of MnM/g-C3N4 altered significantly and developed Pt-like features, such as an significantly increased activity in the hydroegen evolution reaction. In the sub-liberation region, a strong Faradaic peak was detected which is analogous to the literature case of Pt, assigned to chemically bonded proton-electron pairs or under-potential adsorbed hydrogen (H_{UPD}) as described above.

The stored charges obtained from integration of the H_{UPD} peak area QH were 31.67 mC*cm⁻² for MnCo/g-C₃N₄, 23.78 mC*cm⁻² for, 8.82 mC*cm⁻² for MnFe/g-C₃N₄ and 5.22 mC*cm⁻² for Pt/C and for MnCo/g-C₃N₄ proves storage of one proton-electron pair per 60 mass units within the modified carbon nitride material, corresponding to 3 electrons per heptazine pore, or 1.5 wt% of stored hydrogen, at standard pressure and temperature.

Without wanting to be bound by theory comparison with Pt/C and based on the above value it seems apparent that the metal atoms control the nanostructure formation and open transport channels and primary specific surface areas but are likely not involved in hydrogen storage.

### Linear Sweep Voltammography

In order to determine the decrease in overpotentil upon exposure to negative bias potential the linear sweep voltammograms (LSV) were measured according to the conditions described above, essentially in 0.5 M aqueous sulfuric acid at a scan rate of 2mV*s⁻¹ and a negative bias potential of -0.60 V against RHE.

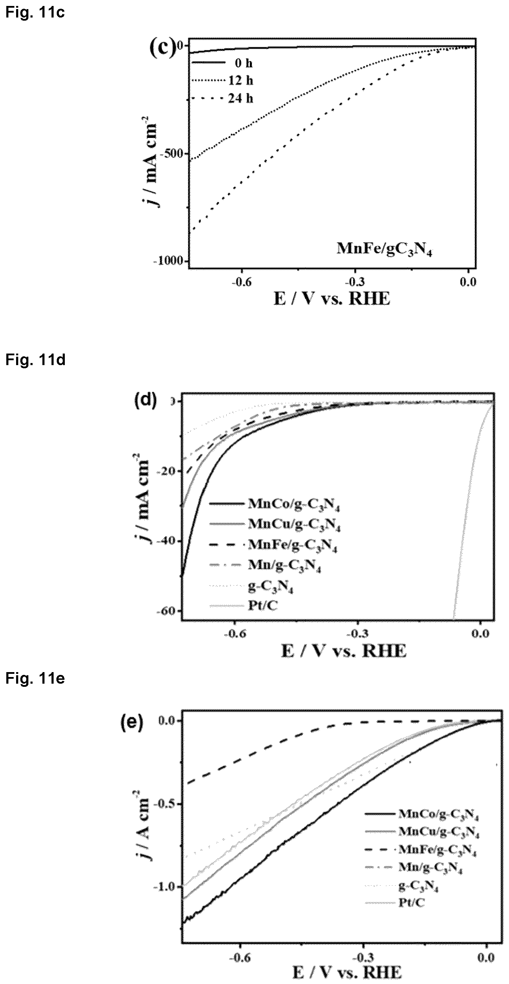

The results are shown in Figures 11a to 11e, in particular Figure 11a for MnCo/g-C₃N₄, Figure 11b for MnCu/g-C₃N₄, Figure 11c for MnFe/g-C₃N₄ each after 0, 12 and 24 hours of exposure.

Figure 11d shows the LSVs of all compounds according to examples 1 to 5 and Pt/C for comparison before and figure 11e after exposure for 24h.

As can be taken from LSV results MnCo/g-C₃N₄ even outperformed the reference Pt/C catalyst: at -0.74 V, the current density of MnCo/g-C₃N₄ reached 1.3 A*cm², compared to Pt/C (0.86 A/cm²)

The onset potential of MnCo/g-C₃N₄ is about the same as Pt/C, while the overpotential at 10 mA*cm⁻² (η₁₀) of MnCo/g-C₃N₄ is only -7 mV, compared to -577 mV before exposure and modification.

The HER rate given as mol of hydrogen per gram of modified carbon nitride material per hour (mol*g⁻¹_{cat}*h⁻¹) for MnCo/g-C₃N₄ is comparable to Pt/C.

As such, according to best knowledge modified MnCo/g-C₃N₄ shows the highest reported HER activity among all Pt-free electrocatalysts so far.

From LSVs a different scan rates Tafel Plots were made to determine the Tafel Slope.

After exposure the Tafel slope of MnM/g-C₃N₄ decreased significantly (i.e., from 262 mVdec⁻¹ to 86 mVdec⁻¹ on MnCo/g-C₃N₄), while commercial Pt/C slightly increased This slope implies a two electron HER process without impedance losseswhich indicates a quick local chemical rearrangements of the stored proton-electron pairs before H₂-formation whereby hydrogen desorption becomes the rate limiting step.

A higher Tafel slope at high currents typically points to mass transport limitations and/or impedance effects of the catalyst at those high currents.

The Tafel values of modified g-C₃N₄ is also still lower than for known electrocatalysts.

From that it isapparent that the inventive modification significantly reduces overpotentials and Tafel slope in HER.

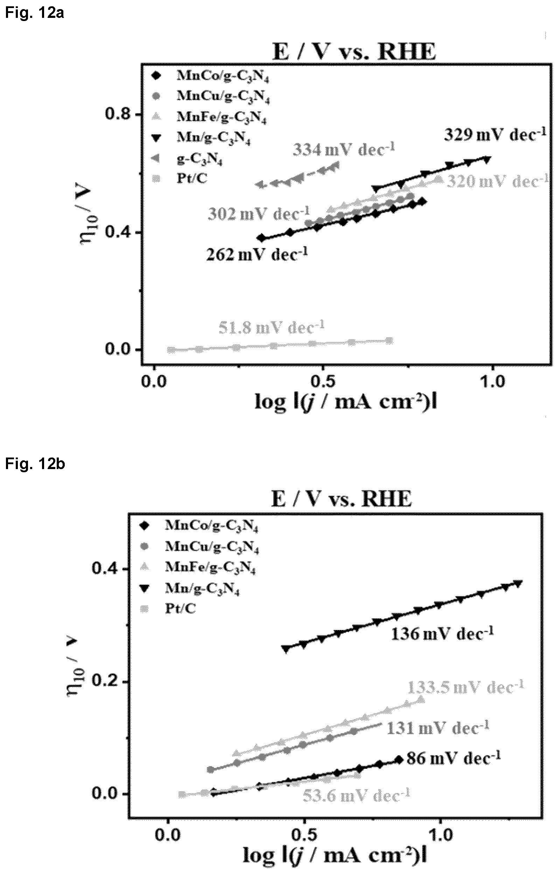

The Tafel plots and slopes are shown in Figures 12a and 12b.

### Electrochemical impedance spectroscopy

Electrochemical impedance spectroscopy (EIS) measurements before and after the inventive modification of carbon nitride materials display a significant decrease of the charge transfer resistance for example of MnM/g-C₃N₄ prepared according to examples 1 to 3 (i.e., from 4.23 kΩ to 0.29 Ω for MnCo/g-C₃N₄).

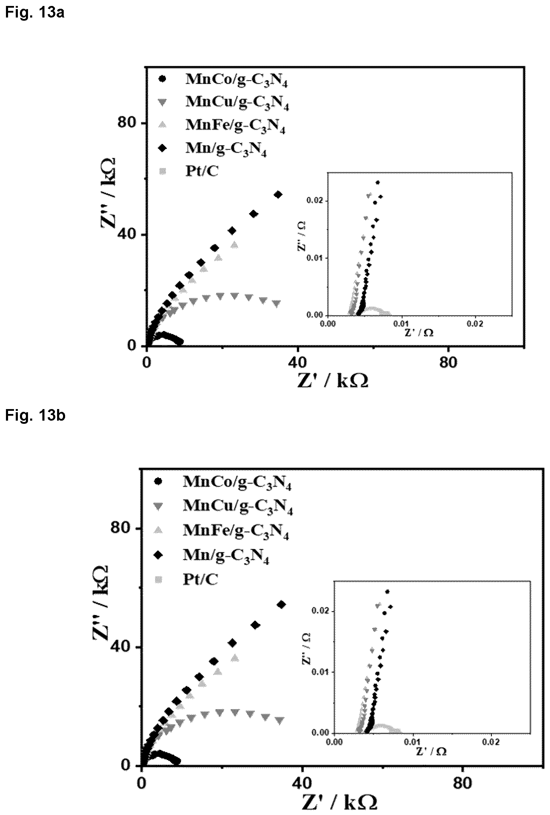

EIS Nyquist Plots are shown in Figures 13a (before exposure) and 13b (after exposure) relative to Pt/C measured at 15mV.

The fitted constant phase elements (CPEs) increased by a factor of more than 20 after exposure, which indicates facilitation of charge injection and electron transport within the inventive modified carbon nitride materials.

As a consequence oft he inventive modification a metal like electronic conductivity, practically free of impedance also across the phase boundaries was observed.

The properties of the inventive modified carbon nitride materials obtained via electrochemical analyses is summarized in table 3.

**Table 3: Properties of inventive modified carbon nitride materials**

| Catalyst of Example | Exp. time [h] | η₁₀ [mV] at 2mV*s⁻¹ vs RHE | Onset potential [mV] | Tafel Slope [mVdec⁻¹] | ECSA | HER Rate at 0.1 V [(mol*g⁻¹_{cat}*h⁻¹) |
|---|---|---|---|---|---|---|
| 1 | 0 | -577 | -254 | 262 | nd | nd |
| 1 | 24 | -7 | 0 | 86 | 29.7 | 83 |
| 2 | 0 | -614 | -285 | 302 | nd | nd |
| 2 | 24 | -39 | 0 | 131 | 23.6 | 28 |
| 3 | 0 | -627 | -301 | 320 | nd | nd |
| 3 | 24 | -53 | 0 | 134 | 22.5 | 24 |
| 4 | 0 | -651 | -454 | 329 | nd | nd |
| 4 | 24 | -300 | 0 | 136 | 19.6 | 2 |
| 5 | 0 | -7 | 0 | 52 | | 92 |
| 5 | 24 | -9 | 0 | 54 | | nd |

| | | | | | | |
|---|---|---|---|---|---|---|
| 1: (MnCo/g-C₃N₄); 2: (MnCu/g-C₃N₄); 3: (MnFe/g-C₃N₄); 4: (Mn/g-C₃N₄); 5: Pt/C Exp time: Exposure time; 0 = before inventive modification i.e. exposure to negative bias potential, 24 = after exposure to negative bias potential of -0.60 V for 24 hours. nd: not determined | | | | | | |

### Chronoamperometry

In order to determine the long-term stability of the inventive compounds chronoamperometry was performed for 15 days at 7 mV.

It was found that the modified carbon nitrides maintained more than 99 % of their initial activity. After polarization for 10000 cycles, the η₁₀ increased slightly by 1.5 mV to around 9 mV , while η₁₀ for Pt/C increased to 17 mV.

This indicates the close-to-perfect stabilization of all structural elements of the modified carbon nitrides accodrding tot he invention.

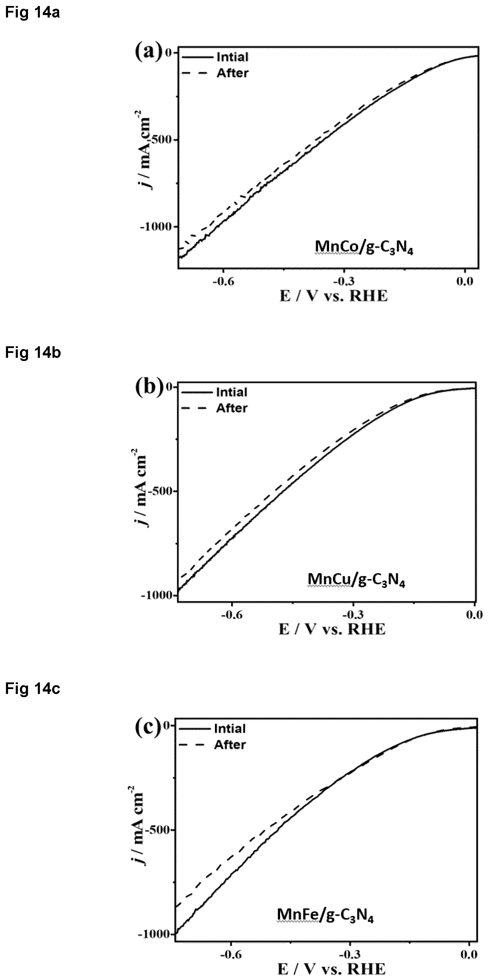

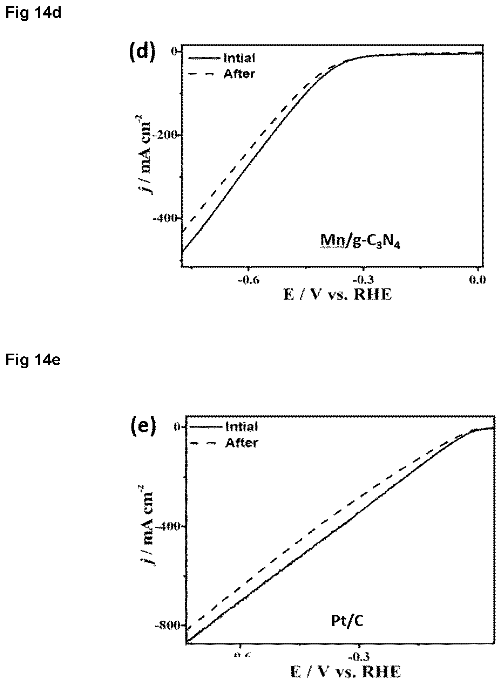

The results of chronoamperometry are shown in Figure 14a for MnCo/g-C₃N₄, Figure 14b for MnCu/g-C₃N₄, Figure 14c for MnFe/g-C₃N₄, Figure 14d for g-C₃N_{4 Melamine} and Figure 14e for Pt/C, the latter for comparison).

### XPS Analyses

In order to identify the electronic and structural changes XPS analyses were conducted before and after exposure of the electrode prepared using according to example 1 to a negative bias potential of 0.6 V for a period of 3 hours to get more insights into the valence states and electronic merits.

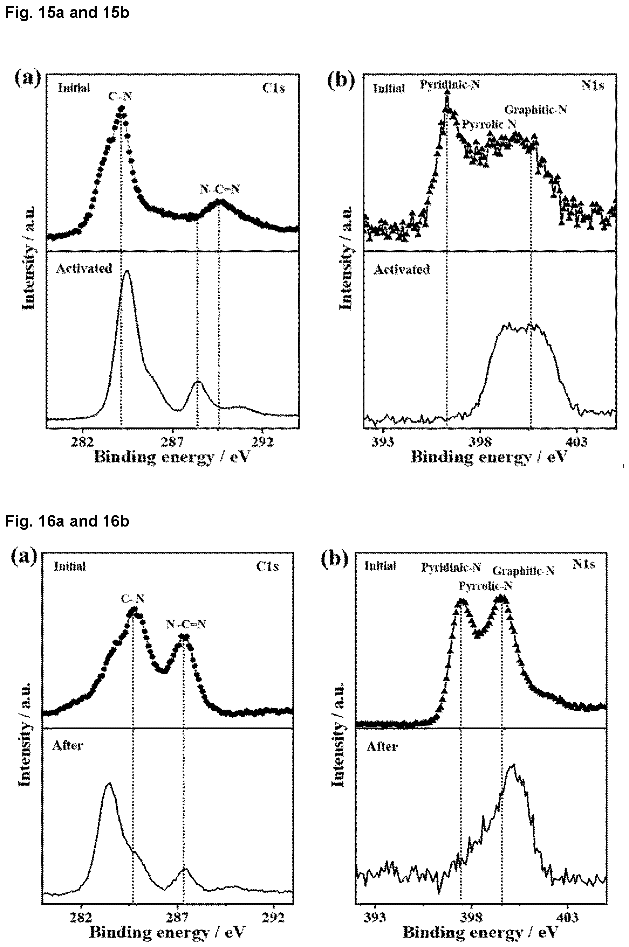

For MnCo/g-C₃N₄ according to the C 1s spectra initially displayed peaks assigned to C-N and N-C=N (see Figure 15a, upper graph). The N 1s spectra displayed the peaks assigned to N1 (pyridinic-N), N2 (pyrrolic-N), and N3 (graphitic-N), (see Figure 15b, upper graph).

After exposure and modification, the C 1s spectra displayed a noticeable narrowing in the peaks and a slightly positive shift for C-N and a negative shift for N-C=N (see Figure 15a, lower graph). The N 1s spectra also shifted towards higher binding energies, and the N1 (pyridinic-N) and N2 (pyrrolic-N) peaks decreased significantly (see Figure 15b, lower graph). This indicates hydrogen storage in the graphitic carbon nitride structure of MnCo/g-C₃N₄, which plausibly led to the redistribution of electrons and increased the electron density on carbon atoms and nitrogen atoms in MnCo/g-C₃N₄.

For g-C₃N₄ Melamine prepared according to example 5 the C 1s spectra before exposure and modification showed peaks of C-N and N-C=N (see Figure 16a, upper graph), while the N 1s spectra displayed peaks of N1 (pyridinic-N), N2 (pyrrolic-N), and N3 (graphitic-N), (see Figure 16b, upper graph). After exposure and modification, the C 1s spectra also displayed a noticed narrowing in the peaks along with a negative shifts to lower binding energy for C-N and an almost unamended binding energy for N-C=N (see Figure 16a, lower graph);

The N 1s spectra also shifted significantly towards higher binding energies and the N1 (pyridinic-N) and N2 (pyrrolic-N) peaks virtually disappeared (see Figure 16b, lower graph). This indicates hydrogen storage inside g-C₃N_{4 Melamine}, which plausibly led to the redistribution of electrons and increased the electron density on carbon atoms and nitrogen atoms in g-C₃N_{4 Melamine}.

It is an important finding that the inventive modification of carbon nitride materials by exposure to a negative bias potential works irrespective of the type of carbon nitride material employed, i.e. whether comprising doping metals or not.

## Claims

1. A process for the modification of a carbon nitride material comprising the step of exposing a carbon nitride material in a liquid protic medium to a negative bias potential for a period of time sufficient to decrease the initial overpotential η₁₀ compared to the Nernst potential by at least 10 %, preferably by at least 50 %, more preferably by at least 80 % and even more preferably by at least 90 %, whereby the overpotential η₁₀ is determined or normalized against Reversible Hydrogen Electrode (RHE) in 0.5 molar aqueous sulfuric acid at 20 °C by linear sweep voltammetry (LSV) with a scan rate of 2 mV*s⁻¹ and measured for the hydrogen evolution reaction (HER).

2. The process according to claim 1 wherein the carbon nitride materials employed encompass materials comprising graphitic carbon nitride.

3. The process according to claim 1 or 2 wherein the carbon nitride materials comprise a plurality of heptazine units of formula (I) 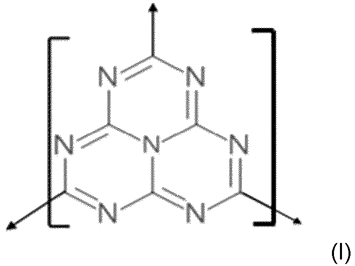 or a plurality of triazine units of formula (II) 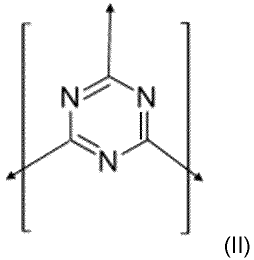 or a plurality of heptazine units of formula (I) and a plurality of triazine units of formula (II), preferably a plurality of heptazine units of formula (I)
wherein
the arrows each denote a bond to a secondary or tertiary amino group through which two or three structural units of formula (I) and/or formula (II) are linked together or
denote a bond to an end group including hydrogen, amino groups (-NH₂), cyano, cyanamino or -N=C=NH groups.

4. The process according to any one of claims 1 to 3 wherein the carbon nitride materials are prepared by a process including any one of
a) Thermal Polymerization or Thermal Condensation of precursor materials
b) Chemical Vapor Deposition (CVD)
c) Solvothermal and Hydrothermal preparation
f) Electrodeposition on a conducting or semi-conducting substrate
g) Template-Assisted Synthesis.

5. The process according to any one of claims 1 to 4 wherein the carbon nitride materials are prepared from materials comprising C-N single or double bonds and lack C-C bonds and are preferably selected from melamine, guanidine, cyanuric acid, cyanuric trichloride, dicyandiamide, urea, thiourea, 5-amino-tetrazole, 3-amino-1,2,4-triazole, 3-amino-1,2,4-triazole tetramer, 3-amino-1,2,4-triazole-5-thiol, cyanuric acid and any mixtures of the aforementioned precursors, whereby melamine, guanidine, cyanuric acid, dicyandiamide, urea and any mixtures thereof are even more preferred and melamine and dicyandiamide are particularly preferred.

6. The process according to any one of claims 1 to 5 wherein the carbon nitride materials employed comprise metals, metal cations, metal complexes or metal complex cations, copolymers or other organic materials provided that the type and amount of the aformentioned metals, metal cations, metal complexes or metal complex cations, copolymers or other organic materials is selected and suited not to substantially impede the modification process, preferably those comprising a plurality of heptazine units of formula (I) and/or triazine units of formula (II) as defined in claim 3 and/or structural units of formula (III) 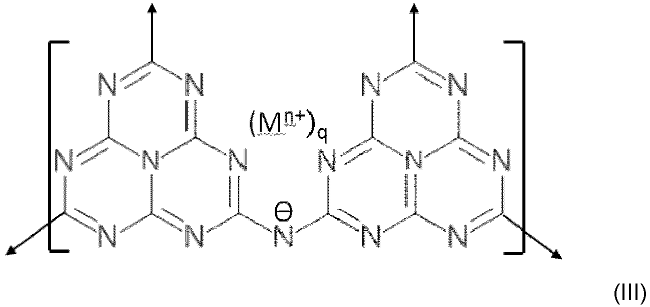 wherein
the arrows each denote a bond to a secondary or tertiary amino group through which two or three structural units of formula (I) are linked together or
a bond to an end group,
Mⁿ⁺ denotes an n-valent cation with n being 1, 2 or 3 preferably 1 or 2, and preferably denotes Fe²⁺, Mn²⁺, Co²⁺, Ni²⁺, Cu²⁺, Cu⁺ or combinations thereof and
q is 1/n.

7. The process according to any one of claims 1 to 6 wherein the carbon nitride materials employed exhibit a carbon to nitrogen wt.- from 0.55 to 0.70, preferably from 0.60 to 0.66 and a content of metals or metal ions with regard to the total mass of the graphitic carbon nitrides of from 0 to 5 wt.%, preferably from 0 to 2 wt. %.

8. The process according to any one of claims 1 to 7 wherein the carbon nitride materials employed exhibit
- a BET surface of 10 to 500 m²/g, preferably of 100 to 400 m²/g and more preferably of 140 to 350 m²/g as measured by nitrogen adsorption at 77 K in accordance with DIN 66131
and additionally or alternatively
- a pore volume (Vₚ) of 0.05 to 0.60 cm³/cm³ or a porosity (ϕ) of 5 to 60 %, preferably a pore volume (Vₚ) of 0.05 to 0.50 cm³/ cm³ or a porosity (ϕ) of 5 to 50 % and more preferably a pore volume (Vₚ) of 0.20 to 0.45 cm³/ cm³ or a porosity (ϕ) of 20 to 45 % each as measured by gas adsorption (BET) experiments in accordance with DIN 66131 using liquid nitrogen at 77 K.

9. The process according to any one of claims 1 to 8 wherein the carbon nitride materials employed are selected from the group comprising MnCo/g-C₃N₄, MnCu/g-C₃N₄, MnFe/g-C₃N₄, Mn/g-C₃N₄ and g-C₃N₄ prepared from melamine, urea and thiourea.

10. The process according to any one of claims 1 to 9 wherein the negative bias potential is
- in the voltage range of from 100mV, preferably 50mV below the overpotential as defined or normalized above to the equilibrium potential of the hydrogen evolution reaction, preferably in a voltage range from 100mV, preferably 50mV below the overpotential to 200 mV, preferably 100 mV above the overpotential
and additionally or alternatively
- in the range of -0.75 V to -0.00 V, preferably in the range of -0.65 V to -0.3 V, and even more preferably 0.65 V to 0.40 V, for example -0.60 V versus RHE.

11. Modified carbon nitride materials obtainable by a process according to anyone of claims 1 to 10.

12. Modified carbon nitride materials or Modified carbon nitride materials according to claim 11 comprising at least one, preferably feature a) and at least one further of the following features or any other combination of 2, 3, 4, 5 of the following features or all of the following features:
a) a content of 0.2 to 1.5 wt.%, preferably 0.8 wt.% of hydrogen, preferably underpotential deposited hydrogen (H_{UPD}) as determined by cyclic voltammetry,
b) an absolute maximum within the range of 280 to 290 eV in the C 1s spectrum of 283.5 ± 0.3 eV as determined by XPS,
c) an absolute maximum within the range of 395 to 405 eV in the N 1s spectrum of 400.2 ± 0.5 eV as determined by XPS,
d) a Tafel Slope of from 50 to 200 mV*dec⁻¹, preferably 70 to 150 mV*dec⁻¹ and even more preferably 80 to 140 mV*dec⁻¹,
e) an overpotential η₁₀ of -0.005 to 0.300 V, preferably -0.005 to -0.200 V and even more preferably -0.007 V to -0.100 V,
f) a current density at a potential of -0.74 V against RHE if measured in 0.5 molar aqueous sulfuric acid at a layer thickness of at least 5 micrometer, preferably 5 micrometer to 500 micrometer, from 100 to 1,500 mA/cm², preferably 200 to 1,500 mA/cm² as determined by LSV at scan rate of 2 mV*s⁻¹.

13. Electrodes, electrolytic cells, catalyst-coated membranes (CCMs) or membrane-electrode-assemblies comprising the modified carbon nitride materials according to claim 11 or 12.

14. Electrolyzers and fuel cells comprising the modified carbon nitride materials according to claim 11 or 12 and/or the electrodes, electrolytic cells, catalyst-coated membranes (CCMs) or membrane-electrode-assemblies according to claim 13, whereby water electrolyzers are preferred.

15. A method of hydrogen storage comprising the step of exposing a carbon nitride material to a negative bias potential in a liquid protic medium by a process according to any one of claims 1 to 10.
